# FASCICULE DE BREVET EUROPEEN

(11) **EP 0 812 875 B1**
(45) Date de publication et mention de la délivrance du brevet: **28.07.2004**
(21) Numéro de dépôt: 97109493.3
(22) Date de dépôt: 11.06.1997
(51) Int. Cl.: C08J 7/06, B60S 1/38

(54) **Dispersion de revêtement et lame d'essuyage revêtue d'une telle solution**
Beschichtungsdispersion und damit beschichtetes Wischblatt
Coating dispersion and wiper blade coated with such a solution

(30) Priorité: 13.06.1996 FR 9607332
(43) Date de publication de la demande: 17.12.1997
(73) Titulaire: VALEO SYSTEMES D'ESSUYAGE, 78321 La Verrière (FR)
(72) Inventeur: Oulie, Michel, 63500 Issoire (FR)
(74) Mandataire: Gamonal, Didier

(56) Documents cités:
- EP-A- 0 539 585
- EP-A- 0 562 191
- DE-A- 3 214 267
- US-A- 5 447 645
- DATABASE WPI Section Ch, Week 8332 Derwent Publications Ltd., London, GB; Class A82, AN 83-731276 XP002026918 & JP 58 109 542 A (MIKAKI PAINT KK) , 29 Juin 1983
- DATABASE WPI Section Ch, Week 9617 Derwent Publications Ltd., London, GB; Class A14, AN 96-167292 XP002026919 & JP 08 048 800 A (AKUROSU KK) , 20 Février 1996
- PATENT ABSTRACTS OF JAPAN vol. 010, no. 208 (C-361), 22 Juillet 1986 & JP 61 047737 A (SHIMADA CHIYANNERU SEISAKUSHO:KK), 8 Mars 1986,

## Description

La présente invention concerne une dispersion, notamment sous la forme d'une émulsion, pour réaliser un revêtement sur un profilé, en caoutchouc ou en élastomère, destiné à réduire le coefficient de frottement entre ce profilé et une surface vitrée ainsi qu'un procédé pour revêtir un profilé d'un tel revêtement.

Le profilé considéré est à titre d'exemple une lame d'essuyage d'essuie-glace de véhicules automobiles dans laquelle, afin d'améliorer la qualité d'essuyage obtenue au moyen de cette lame d'essuyage, en caoutchouc ou en élastomère naturel ou synthétique, il est connu de la munir d'un revêtement comportant une poudre, notamment de graphite cristallin, comportant des particules de très petites dimensions dont la fonction, lors des phases d'essuyage, est alors équivalente à celle d'un "lubrifiant" permettant d'améliorer de manière importante la qualité de l'essuyage.

Il est connu de réaliser un tel revêtement à l'aide d'une dispersion constituée essentiellement par un liant, sous forme d'une résine acrylique, vinylique ou styrènique ou d'uréthane dans lequel est dispersée la poudre de graphite cristallin.

Le revêtement est réalisé par trempage de la lame dans la dispersion ou par enduction de la lame au moyen de la dispersion, puis par séchage.

Un tel revêtement, s'il permet d'améliorer la qualité de l'essuyage, a pour inconvénient d'être particulièrement fragile en ce qu'il est notamment très peu résistant aux détergents et aux lessives qui sont notamment utilisés pour le lavage des véhicules.

On constate ainsi une très faible durée de vie du revêtement "lubrifiant" qui aboutit rapidement à sa détérioration, voire à sa disparition complète, nuisant alors de manière importante à la qualité de l'essuyage.

L'invention a pour but de proposer une nouvelle composition pour une dispersion en vue de la réalisation d'un revêtement de lubrification d'un profilé, notamment de lames d'essuyage pour essuie-glace de véhicule automobile.

Dans ce but, l'invention propose une dispersion du type comportant une poudre de graphite, dispersée dans une résine, qui est essentiellement caractérisée en ce qu'elle comporte un agent imperméabilisant.

Grâce aux enseignements de l'invention, la présence d'un agent imperméabilisant confère des propriétés hydrophobes au revêtement qui lui permettent de résister de manière très satisfaisante aux agressions extérieures et notamment aux agents détergents et aux lessives. Selon l'invention, l'agent imperméabilisant est un copolymère acrylique additionné de cire.

L'agent imperméabilisant peut aussi comporter de l'isopropanol.

La résine constituant le liant de la dispersion, qui lui confère sa tenue après réticulation lors de l'opération de séchage, est de préférence une résine acrylique.

La dispersion peut aussi comporter un agent stabilisant d'émulsion, notamment un agent alcalin et de préférence de l'ammoniaque.

Afin de permettre une mise en oeuvre industrielle aisée de la dispersion, elle comporte un agent pour empêcher la formation de mousse lors du mélange des composants de la dispersion.

L'agent anti-moussant est par exemple à base d'ester phosphorique qui peut être additionné d'isobutanol et de butylglycol.

La poudre est de préférence une poudre de graphite cristallin.

On décrira maintenant une composition préférée d'une dispersion conforme aux enseignements de l'invention.

La dispersion ou émulsion comporte de l'eau adoucie, à pH sensiblement neutre, ou non ionisée dans une proportion en poids d'environ 74%.

La résine utilisée est une résine acrylique commercialisée par la société PROTEX sous la dénomination "ACRYMUL AMN 317 R" qui est incorporée dans une proportion en poids sensiblement égale à 14,43%.

La poudre utilisée est une poudre de graphite micronisée de la référence "ACHESON 545" dont la dimension des grains ou particules est, pour 85% des particules, inférieure à 8 microns et ont une surface spécifique de 15m²/g. Cette poudre de graphite est incorporée à la dispersion dans une proportion en poids sensiblement égale à 10,76%.

L'agent imperméabilisant incorporé à la dispersion conformément aux enseignements de l'invention, est par exemple du "DRYOL PA" commercialisé par la société PROTEX.

Cet imperméabilisant est un copolymère acrylique additionné de cire qui contient également de l'isopropanol, de l'ammoniaque et du styrène.

Cet agent imperméabilisant est incorporé à la dispersion dans une proportion en poids sensiblement égale à 0,59%.

Afin d'éviter la formation de mousse en trop grande quantité lors de la préparation de la dispersion sous forme d'émulsion, il est incorporé dans la dispersion un agent anti-moussant commercialisé par la société PROTEX dénommé "MOUSSEX 581 PL" qui est un ester phosphorique additionné d'isobutanol et butylglycol. Cet agent anti-moussant est incorporé dans une proportion en poids sensiblement égale à 0,074%.

L'agent stabilisant de la dispersion en émulsion est de l'ammoniaque dosé à 20% et qui est incorporée dans la dispersion dans une proportion en poids sensiblement égale à 0,148%.

L'ensemble des composants qui viennent d'être mentionnés, dans les proportions indiquées, est mélangé pour obtenir une émulsion conforme aux enseignements de l'invention qui est ensuite appliquée sur la lame d'essuyage par tout procédé adapté, tel que par exemple par immersion de la lame dans un bain de la dispersion, par enduction de la lame au moyen de la dispersion ou par projection de la dispersion sur la lame d'essuyage.

Après cette étape de dépôt de la dispersion de graphitage, il est procédé à un séchage qui permet d'obtenir une réticulation de la résine à basse température, environ égale à 70°C, et une évaporation de l'agent stabilisant et de l'agent anti-moussant qui ne laissent subsister aucun résidu dans la couche ou revêtement de la lame d'essuyage qui est, conformément aux enseignements de l'invention, une couche qui améliore le coefficient de friction entre la lame d'essuyage et la surface vitrée à essuyer et qui est imperméable.

Le revêtement ainsi formé est insoluble et il résiste donc parfaitement aux agents détergents et aux lessives utilisés ultérieurement lors des opérations de lavage du véhicule.

L'invention n'est bien entendu pas limitée à la composition préférée qui vient d'être décrite en détails.

Le liant constitué par la résine peut par exemple être à base de résine vinylique.

L'agent imperméabilisant permet d'obtenir un revêtement hydrophobe.

L'agent stabilisant de l'émulsion peut être constitué par tout produit alcalin ou par un hydroxyde de sodium ou de potassium, mais il est à noter que ces autres produits ont pour inconvénient d'aboutir à la formation de résidus dans le revêtement après réticulation.

Conformément à un autre aspect de l'invention, le procédé pour revêtir le profilé d'un revêtement qui réduit le coefficient de frottement entre ce profilé et la surface vitrée, consistant à utiliser une dispersion conforme aux enseignements de l'invention, peut comporter une étape finale, après séchage, de brossage du profilé muni de son revêtement.

Le brossage est par exemple effectué en faisant passer longitudinalement le profilé entre deux brosses tournantes adjacentes.

Les brosses tournent en sens inverse l'une de l'autre et de préférence dans le sens opposé à la direction d'avancement du profilé entre les brosses.

L'étape complémentaire de brossage permet d'homogénéiser le revêtement déposé sur la surface du profilé et d'éviter que ce revêtement présente des défauts d'aspect ou des irrégularités dans son épaisseur ou des défauts d'adhérence.

Il est en effet souhaitable de supprimer ces défauts qui, s'ils subsistent, risquent de provoquer, lorsque le profilé est une lame d'essuyage, des stries lors de l'essuyage, d'aboutir à des dépôts localisés de graphite sur la vitre, etc.

Le brossage permet ainsi de supprimer les excès de graphite, d'éliminer les particules de graphite qui adhèrent mal au profilé et d'homogénéiser les particules de graphite en orientant les lamelles dans le même sens. Le brossage permet aussi de détecter la présence du revêtement car le brossage provoque un changement de l'aspect apparent du revêtement qui passe de la couleur noir mat à une teinte gris métallisé.

Les brosses peuvent être remplacées par des galets de "brossage" qui sont par exemple réalisés en feutre ou en matériau alvéolaire, les galets présentant des profils complémentaires de celui du profilé à brosser.

A titre de variante, le brossage peut être remplacé par une opération équivalente résultant de la projection à haute pression de jets d'eau sur le profilé.

## Revendications

1. Dispersion pour réaliser un revêtement sur un profilé, en caoutchouc ou en élastomère, du type comportant une poudre, notamment de graphite, dispersée dans une résine, **caractérisée en ce qu'**elle comporte un agent imperméabilisant et **en ce que** l'agent imperméabilisant est un copolymère acrylique additionné de cire.

2. Dispersion selon la revendication 1, **caractérisée en ce que** l'agent imperméabilisant comporte de l'isopropanol.

3. Dispersion selon l'une quelconque des revendications précédentes, **caractérisée en ce que** la résine est une résine acrylique.

4. Dispersion selon l'une quelconque des revendications précédentes, **caractérisée en ce qu'**elle comporte un agent stabilisant d'émulsion, notamment un agent alcalin.

5. Dispersion selon la revendication 4, **caractérisée en ce que** l'agent stabilisant est de l'ammoniaque.

6. Dispersion selon l'une quelconque des revendications précédentes, **caractérisée en ce qu'**elle comporte un agent pour empêcher la formation de mousse lors du mélange des composants de la dispersion.

7. Dispersion selon la revendication 6, **caractérisée en ce que** l'agent anti-moussant est à base d'ester phosphorique.

8. Dispersion selon la revendication 7, **caractérisée en ce que** l'agent anti-moussant est un ester phosphorique additionné d'isobutanol et de butylglycol.

9. Dispersion selon l'une quelconque des revendications précédentes, **caractérisée en ce que** la poudre est une poudre de graphite cristallin.

10. Lame d'essuyage d'un essuie-glace de véhicule automobile, **caractérisé en ce qu'**elle est revêtue d'une dispersion selon l'une des revendications 1 à 9 et **en ce que** la dispersion est séchée.

11. Procédé pour revêtir un profilé d'un revêtement qui réduit le coefficient de frottement entre le profilé et une surface vitrée, **caractérisé en ce que** l'on utilise une dispersion conforme à l'une quelconque des revendications précédentes pour enduire le profilé, ou immerger le profilé dans la dispersion, ou projeter la dispersion sur le profilé, puis **en ce que** l'on fait sécher le profilé.

12. Procédé selon la revendication 11, **caractérisé en ce que**, après avoir fait sécher le profilé, on procède à un brossage du profilé muni de son revêtement.

13. Procédé selon la revendication 12, **caractérisé en ce que** le brossage est effectué en faisant passer longitudinalement le profilé entre deux brosses adjacentes et tournant en sens inverse l'une de l'autre.

14. Procédé selon la revendication 12, **caractérisé en ce que** les brosses tournent dans le sens opposé à la direction d'avancement du profilé entre les brosses.

15. Procédé selon la revendication 12, **caractérisé en ce que** le brossage est effectué en faisant passer longitudinalement le profilé entre deux galets présentant des profils complémentaires de celui du profilé à brosser.

16. Procédé selon la revendication 12, **caractérisé en ce que** le brossage est effectué en projetant sur le profilé des jets d'eau sous haute pression.

17. Lame d'essuyage d'un essuie-glace de véhicule automobile, **caractérisé en ce qu'**elle est revêtue d'un revêtement obtenu par le procédé selon l'une des revendications 11 à 16.

## Patentansprüche

1. Dispersion zur Herstellung einer Beschichtung auf einem Profil aus Gummi oder Elastomer, mit einem Pulver, insbesondere einem in einem Harz dispergierten Graphitpulver, **dadurch gekennzeichnet, dass** sie ein Wasser abstoßendes Mittel enthält und dass das Wasser abstoßende Mittel ein wachshaltiges Acrylpolymer ist.

2. Dispersion nach Anspruch 1, **dadurch gekennzeichnet, dass** das Wasser abstoßende Mittel Isopropanol enthält.

3. Dispersion nach einem der vorherigen Ansprüche, **dadurch gekennzeichnet, dass** das Harz ein Acrylharz ist.

4. Dispersion nach einem der vorherigen Ansprüche, **dadurch gekennzeichnet, dass** sie ein Emulsions-Stabilisierungsmittel, insbesondere ein alkalihaltiges Mittel enthält.

5. Dispersion nach Anspruch 4, **dadurch gekennzeichnet, dass** das Stabilisierungsmittel Ammoniak ist.

6. Dispersion nach einem der vorherigen Ansprüche, **dadurch gekennzeichnet, dass** sie ein Mittel enthält, um die Schaumbildung beim Mischen der Bestandteile der Dispersion zu unterbinden.

7. Dispersion nach Anspruch 6, **dadurch gekennzeichnet, dass** das Antischaummittel auf Phosphoresterbasis ist.

8. Dispersion nach Anspruch 7, **dadurch gekennzeichnet, dass** das Antischaummittel ein Phosphorester ist, der Isobutanol und Butylglycol enthält.

9. Dispersion nach einem der vorherigen Ansprüche, **dadurch gekennzeichnet, dass** das Pulver ein Kristallgraphitpulver ist.

10. Scheibenwischerblatt eines Kraftfahrzeugs, **dadurch gekennzeichnet, dass** es mit einer Dispersion nach einem der Ansprüche 1 bis 9 beschichtet ist und dass die Dispersion getrocknet ist.

11. Verfahren zum Beschichten eines Profils mit einer Beschichtung, die den Reibungskoeffizienten zwischen dem Profil und einer Glasoberfläche reduziert, **dadurch gekennzeichnet, dass** man eine Dispersion nach einem der vorherigen Ansprüche verwendet, um das Profil zu beschichten, oder das Profil in die Dispersion eintaucht, oder die Dispersion auf das Profil aufsprüht, und das Profil dann trocknen lässt.

12. Verfahren nach Anspruch 11, **dadurch gekennzeichnet**, da man nach dem Trocknen des Profils ein Bürsten des mit seiner Beschichtung versehenen Profils vornimmt.

13. Verfahren nach Anspruch 12, **dadurch gekennzeichnet, dass** das Bürsten erfolgt, indem man das Profil in Längsrichtung durch zwei einander angrenzende Drehbürsten laufen lässt, die sich in einander entgegen gesetzter Richtung drehen.

14. Verfahren nach Anspruch 12, **dadurch gekennzeichnet, dass** sich die Bürsten entgegen der Durchlaufrichtung des Profils zwischen den Bürsten drehen.

15. Verfahren nach Anspruch 12, **dadurch gekennzeichnet, dass** das Bürsten erfolgt, indem man das Profil in Längsrichtung durch zwei Scheiben laufen lässt, die das zu bürstende Profil ergänzende Profile aufweisen.

16. Verfahren nach Anspruch 12, **dadurch gekennzeichnet, dass** das Bürsten durch Hochdruckspritzen eines Wasserstrahls auf das Profil erfolgt.

17. Scheibenwischerblatt eines Kraftfahrzeugs, **dadurch gekennzeichnet, dass** es mit einer Beschichtung beschichtet ist, die nach dem Verfahren gemäß einer der Anspruche 11 bis 16 hergestellt wird.

## Claims

1. A dispersion for producing a coating on a profiled member, made from rubber or elastomer, of the type comprising a powder, in particular graphite, dispersed in resin, **characterised in that** it comprises a waterproofing agent and **in that** the waterproofing agent is an acrylic copolymer with wax added.

2. A dispersion according to Claim 1, **characterised in that** the waterproofing agent comprises isopropanol.

3. A dispersion according to any one of the preceding claims, **characterised in that** the resin is an acrylic resin.

4. A dispersion according to any one of the preceding claims, **characterised in that** it comprises an emulsion stabilising agent, in particular an alkaline agent.

5. A dispersion according to Claim 4, **characterised in that** the stabilising agent is ammonia.

6. A dispersion according to any one of the preceding claims, **characterised in that** it comprises an agent for preventing the formation of foam when the components of the dispersion are mixed.

7. A dispersion according to Claim 6, **characterised in that** the anti-foaming agent is based on phosphoric ester.

8. A dispersion according to Claim 7, **characterised in that** the anti-foaming agent is a phosphoric ester with isobutanol and butyl glycol added.

9. A dispersion according to any one of the preceding claims, **characterised in that** the powder is a crystalline graphite powder.

10. A wiper blade for a motor vehicle wiper, **characterised in that** it is coated with a dispersion according to one of Claims 1 to 9 and **in that** the dispersion is dried.

11. A method for coating a profiled member with a coating which reduces the coefficient of friction between the profiled member and a glazed surface, **characterised in that** a dispersion according to any one of the preceding claims is used for coating the profiled member, or immersing the profiled member in the dispersion, or spraying the dispersion onto the profiled member, and then **in that** the profiled member is dried.

12. A method according to Claim 11, **characterised in that**, after having made the profiled member dry, a brushing of the profiled member provided with its coating is carried out.

13. A method according to Claim 12, **characterised in that** the brushing is carried out by making the profiled member pass longitudinally between two adjacent brushes rotating in opposite directions to each other.

14. A method according to Claim 12, **characterised in that** the brushes rotate in the opposite direction to the direction of travel of the profiled member between the brushes.

15. A method according to Claim 12, **characterised in that** the brushing is carried out by making the profiled member pass longitudinally between two rollers having profiles complementary to that of the profiled member to be brushed.

16. A method according to Claim 12, **characterised in that** the brushing is carried out by spraying highpressure water jets onto the profiled member.

17. A wiper blade of a motor vehicle wiper, **characterised in that** it is coated with a coating obtained by the method according to one of Claims 11 to 16.
